# NEW EUROPEAN PATENT SPECIFICATION

(11) **EP 2 812 483 B2**
(45) Date of publication and mention of the opposition decision: **03.07.2019**
(45) Mention of the grant of the patent: 14.09.2016
(21) Application number: 13712591.0
(22) Date of filing: 11.02.2013
(51) Int. Cl.: D21C 9/00, D21H 11/16, D21H 11/18, D21D 1/20

(54) **METHOD FOR PRETREATING CELLULOSE PULP**
VERFAHREN ZUR VORBEHANDLUNG VON FASERSTOFF
PROCEDE DE PRETRAITEMENT DE PATE A PAPIER

(30) Priority: 10.02.2012 FI 20125146
(43) Date of publication of application: 17.12.2014
(73) Proprietor: UPM-Kymmene Corporation, 00100 Helsinki (FI)
(72) Inventor: NUOPPONEN, Markus, FI-00550 Helsinki (FI); ÖSTERBERG, Monika, FI-Espoo 02660 (FI); LAINE, Janne, FI-02330 Espoo (FI); PERE, Jaakko, FI-02044 VTT (FI)
(74) Representative: Hoffmann Eitle
(86) International application number: PCT/FI2013/050150
(87) International publication number: WO 2013/117823

(56) References cited:
- WO-A1-2009/126106
- WO-A1-2010/092239
- WO-A1-2010/131088
- WO-A1-2011/064441
- WO-A2-2010/125247
- US-A1- 2005 272 836

## Description

### FIELD OF THE INVENTION

The invention relates to methods for the manufacture of nanofibrillated cellulose, particularly to pretreating of cellulose pulp in the manufacture of nanofibrillated cellulose, and to a nanofibrillated cellulose product obtainable by the method.

### BACKGROUND

Nanofibrillated cellulose (NFC) is typically obtained by mechanical disintegration of cellulose pulp, carried out with suitable disintegration equipment. Mechanical disintegration is an energy consuming operation where the production capacity is limited. Thus several measures have been proposed for improving the grinding or fibrillation process, such as modification of pulp prior to the disintegration. Said modification may comprise chemical modification of the pulp to yield anionically or cationically charged grades of nanofibrillated cellulose (NFC). Said chemical modification may be based for example on carboxymethylation, oxidation, esterification, or etherification of cellulose molecules. However, said chemical modification methods result in grades of NFC, which are not desirable for all applications and thus also alternative methods have been studied, such as pregrinding, carboxymethylcellulose adsorption and enzymatic treatment.

In the prior art preparing microcrystalline cellulose, comprising compaction of the cellulose before degradation has been described in WO 2010/31088. Further, Solala, I. et al describes Masuko refining of unbleached kraft birch pulp (Solala, I. et al, Mechanoradical formation and its effects on birch kraft pulp during the preparation of nanofibrillated cellulose with Masuko refining, Holzforschung, vol. 66, issue 4 (May 2012), p. 477-483).

Accordingly, there exists a need to provide improved methods for the preteatment of pulp in the manufacture of NFC and improved methods for the manufacture of NFC.

### SUMMARY

The present invention is based on studies on pretreating of cellulose pulp prior to mechanical disintegration. It was found that mechanical disintegration, particularly fibrillation can be enhanced and a NFC product with improved properties can be obtained.

The method for pretreating of cellulose pulp comprises the steps where an aqueous suspension of native cellulose pulp is brought into contact with an inorganic or organic acid and agitated to obtain pH of the suspension below 4, followed by removal of water and washing the solid matter with water, forming an aqueous suspension of the solid matter, then at least one water soluble salt of NH₄⁺, alkali metal, alkaline earth metal or metal is added to the formed suspension followed by agitation, the pH of suspension is adjusted to more than 7 using an inorganic base, followed by removal of water, and washing the solid matter with distilled or deionized water.

The method for the manufacture of nanofibrillated cellulose comprises the steps where native cellulose pulp is pretreated, said pretreating comprising the steps where an aqueous suspension of native cellulose pulp is brought into contact with an inorganic or organic acid and agitated to obtain pH of the suspension below 4, followed by removal of water and washing the solid matter with water, forming an aqueous suspension of the solid matter, then at least one water soluble salt of NH₄⁺, alkali metal, alkaline earth metal or metal is added to the formed suspension followed by agitation, the pH of suspension is adjusted to more than 7 using an inorganic base, followed by removal of water, and washing the solid matter with distilled or deionized water, forming an aqueous suspension of the solid matter and disintegrating the solid matter.

A NFC product is obtainable with the method, said product having turbidity of less than 200 NTU and Brookfield viscosity more than 15 000 mPas (determination suitably with 1.5%, 10 rpm).

Accordingly, the present invention provides means for the manufacture of NFC with improved properties, in a more efficient and economical way.

The characteristic features of the invention are presented in the appended claims.

### BRIEF DESCRIPTION OF THE DRAWINGS

**Figure 1** illustrates the effect of pretreatment of cellulose pulp before disintegration on the amount of nanomaterial in the NFC product.
**Figure 2** presents microscope photos of fibrillated cellulose products without pretreatment (a) and pretreated NFC (b).
**Figure 3** illustrates graphically the turbidity of NFC samples as a function of energy consumption in fibrillation.
**Figure 4** illustrates graphically the viscosity of NFC samples as a function of energy consumption in fibrillation.

### DEFINITIONS

Unless otherwise specified, the terms, which are used in the specification and claims, have the meanings commonly used in the field of pulp and paper industry. Specifically, the following terms have the meanings indicated below.

As used herein, the term "nanofibrillated cellulose" or NFC is understood to encompass all microfibrillated celluloses (MFC) and fibril celluloses. Further, there are several other widely used synonyms for nanofibrillated cellulose. For example: cellulose nanofiber, nanofibril cellulose (CNF), nanofibrillar cellulose (NFC), nano-scale fibrillated cellulose, microfibrillar cellulose, or cellulose microfibrils.

Mechanical disintegration means here any means for disintegration or fibrillation cellulose fibers to obtain NFC. Fibrillation may be carried out for example using a stone mill, refiner, grinder, homogenizer, colloider, supermass colloider, friction grinder, ultrasound-sonicator, fluidizer such as microfluidizer, macrofluidizer or fluidizer-type homogenizer.

The term "native cellulose pulp" refers here to any cellulose pulp, which has not been chemically modified.

The term "suspension" refers here to a heterogeneous fluid containing solid particles and it encompasses also slurries and dispersions, typically in aqueous liquid.

### DETAILED DESCRIPTION OF THE INVENTION

It was surprisingly found that mechanical disintegration of cellulose pulp can be improved, whereby higher yields of the desired nanofibrillated product can be obtained with less energy. Additionally the properties of the final NCF product are simultaneously improved.

Accordingly, cellulose pulp is pretreated with acid and base prior to the mechanical disintegration. The pretreatment is effected by subjecting the cellulose pulp to mild acid treatment for removing positively charged ions, followed by treatment with a base containing defined, positively charged ions, for replacing the earlier ions. The pretreated cellulose pulp is subsequently disintegrated. The pretreatment provides the final product with excellent gelling properties and transparency.

The method for pretreating of cellulose pulp comprises the steps where an aqueous suspension of native cellulose pulp is brought into contact with an inorganic or organic acid and agitated to obtain pH of the suspension below 4, followed by removal of water and washing the solid matter with water, and forming an aqueous suspension of the solid matter, then at least one water soluble salt of NH₄⁺, alkali metal, alkaline earth metal or metal is added to the formed suspension followed by agitation, the pH of suspension is adjusted to more than 7 using an inorganic base, followed by removal of water, and washing the solid matter with distilled or deionized water.

The method for manufacture of nanofibrillated cellulose comprises the steps where native cellulose pulp is pretreated, said pretreating comprising the steps where an aqueous suspension of native cellulose pulp is brought into contact with an inorganic or organic acid and agitated to obtain pH of the suspension below 4, followed by removal of water and washing the solid matter with water, and forming an aqueous suspension of the solid matter, then at least one water soluble salt of NH₄⁺, alkali metal, alkaline earth metal or metal is added to the formed suspension followed by agitation, the pH of suspension is adjusted to more than 7 using an inorganic base, followed by removal of water, and washing the solid matter with distilled or deionized water, forming an aqueous suspension of the solid matter and disintegrating the solid matter.

In said methods the water soluble salt of NH₄⁺, alkali metal, alkaline earth metal or metal is suitably used in an amount to obtain a concentration of 0.001 to 0.01M (0.1 to 1 mol/kg fiber or solid material), particularly of 0.002 to 0.008M.

In the pretreating method the content of solid matter in the suspension may range from 0.1 to 20 % by weight, suitably from 0.5 to 3 % by weight.

The inorganic or organic acid is suitably an acid, which can be easily washed away, leaves no undesirable residues in the product and has a pKa-value between -7 and 7.

The organic acid may be selected from short chain carboxylic acids, such as acetic acid, formic acid, butyric acid, propionic acid, oxalic acid and lactic acid. Short chain carboxylic acid refers here to C1- C8 acids. The inorganic acid may suitably be selected from hydrochloric acid, nitric acid, hydrobromic acid and sulphuric acid.

Suitably the acid is used as a dilute, from 0.001 to 5M aqueous solution, which can be conveniently added to the suspension. Suitably the addition time of the acid is between 0.2 to 24 hours.

The pH is adjusted using the acid to below 4, suitably to below 3.

Water used in the method may be tap water, distilled water, deionized water, purified water or sterilized water. Suitably distilled water or deionized water is used, particularly in the washing step following the pH adjustment to more than 7.

Water removal from the suspension or slurry may be carried out by any suitable means, for example with web press, pressure filtering, suction filtering, centrifuging and screw press.

The solid matter may be washed 1 - 5 times, suitably 2 - 3 times with water after acid treatment to remove excess acid.

Washing of solid matter with water may suitably be carried out after the water removal steps using the same equipment.

The water soluble salt of NH₄⁺, alkali metal, alkaline earth metal or metal, may be selected from inorganic salts, complexes and salts formed with organic acids, of NH₄⁺, alkali metal, alkaline earth metal or metals, suitably of NH₄⁺, Na, K, Li, Ag and Cu. The inorganic salt is suitably sulphate, nitrate, carbonate or bicarbonate salt, such as NaHCO₃, KNO₃ or AgNO₃. M refers to alkali metal, alkaline earth metal or metal. According to one suitable embodiment the water soluble salt is sodium salt.

The inorganic base is selected from NaOH, KOH, LiOH and NH₃.

The pH of the suspension is adjusted with the inorganic base to more than 7, suitably from 7.5 to 12, particularly suitably from 8 to 9.

After the pH adjustment with the inorganic base, the water removal is carried out and the solid matter is washed with distilled or deionized water. Suitably the washing is repeated or carried out until the conductivity of the used washing liquid, such as filtrate, is less than 200 µS/cm, suitably less than 100 µS/cm, particularly suitably less than 20µS/cm.

After the addition of components (acid, salt, base) to the suspensions the formed mixtures may be agitated and allowed to stand before continuing the method.

The obtained pretreated solid matter, suitably as an aqueous suspension, is mechanically disintegrated in a disintegrator to obtain the nanofibrillated cellulose product. Suitably the disintegrator is selected from a stone mill, ball mill, refiner, grinder, homogenizer, high pressure homogenizer, colloider, supermass colloider, friction grinder, ultrasound-sonicator, fluidizer, microfluidizer, macrofluidizer, high pressure fluidizer, ultrahigh pressure fluidizer or fluidizer-type homogenizer.

The pretreated solid matter is preground prior to the mechanical disintegration. Any standard grinders or mills can be used. Pregrinding may be carried out using any suitable grinding apparatus.

The mechanical disintegration is suitably carried out from 1 to 10 passes, particularly suitably from 1 to 5 passes.

A NFC product is obtainable by the method, said NFC product comprising mechanically disintegrated native cellulose, having turbidity of less than 200 NTU, even less than 150 NTU. Said product may have Brookfield viscosity more than 15 000 mPas, suitably more than 30 000 mPas, particularly suitably more than 40 000 mPas (1.5%,10 rpm).

The apparent viscosity of NFC is suitably measured with a Brookfield viscosimeter (Brookfield viscosity) or another corresponding apparatus. Suitably a vane spindle (number 73) is used. There are several commercial Brookfield viscosimeters available for measuring apparent viscosity, which all are based on the same principle. Suitably RVDV spring (Brookfield RVDV-III) is used in the apparatus. As a result, a viscosity graph is obtained with varying shear rate. A low rotational speed is suitable, such as 10 rpm. In the Brookfield viscosity method, the NFC sample is diluted in a liquid, suitably water, with agitation to a concentration ranging between 0.1 and 2.0 % by weight, (in the examples 1.5%).

The turbidity may be measured quantitatively using optical turbidity measuring instruments, which work on two different physical principles: measurement of attenuation of the intensity of a light beam passing through the liquid (turbidimetry) and measurement of the intensity of scattered radiation (light) (nephelometry). The scattering is caused by the particles. Turbidity may also be determined by reflectometry. There are several commercial turbidometers available for measuring quantitatively turbidity. In the present case the method based on nephelometry is used. The units of turbidity from a calibrated nephelometer are called Nephelometric Turbidity Units (NTU).

The measuring apparatus (turbidometer) is typically calibrated and controlled with standard calibration samples, followed by measuring of the turbidity of the diluted NFC sample.

In the method, a fibril cellulose sample is diluted with a liquid, preferably an aqueous medium, such as water, to a concentration below the gel point of said fibril cellulose, and turbidity of the diluted sample is measured. Suitably, said concentration may range between 0.001 and 1 % by weight, suitably from 0.1 to 1%, and the turbidity is measured. The mean value and standard deviation are calculated from the obtained results, and the final result is given as NTU units.

Analysis of fibers may be carried out by a method based on accurate high resolution microscopy and image analysis, which is suitable for the quantitative determination of micro- and nanoscale fibers of NFC whereby the unfibrillated fiber-like material is determined in the fibril cellulose. The amount of detectable fibers or fiber-like particles within a known amount of pulp sample is measured and the rest of the sample is then regarded as belonging into the non-detectable category, i.e. micro- and nanoscale particles. Commercial fiber analyzers can be used for characterizing the unfibrillated fiber-like material in fibril cellulose. For example, Kajaani Fiberlab and FS-300 devices are suitable. However, other similar fiber analyzers with similar detection resolution can be also used.

The fiber analysis comprises the steps, where the dry mass of the sample is determined for use in the analysis, followed by volumetric scaling during dilution and sampling, disintegration of the sample. A greater sample size than with conventional pulp samples may be used if necessary. The sample size for the measurements may be increased from the recommended one in order to increase the amount of detected fibers during the analysis.

For simplicity a quantitative measure of particles per milligram is used.

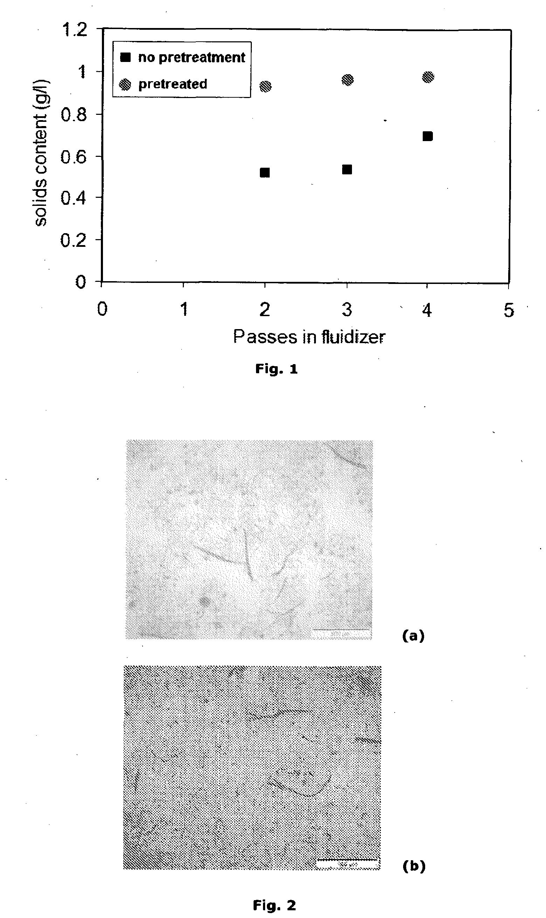

The amount of the nanomaterial in the upper phase as described in Figure 1, was determined by weighing in 50 ml tubes 1.6 g/L solids of a wet sample, followed by centrifuging 2 hours at 20°C temperature. After centrifuging the sample was dried and weighed and the amount of the nanomaterial of the upper phase was calculated. The more the sample was fibrillated, the bigger amount of nanomaterial was found in the upper phase. This can be seen in Figure 2, where the pretreated product contained almost twice the amount of nanomaterial when compared to the one without pretreatment.

Any native cellulose pulp from any plant origin, obtained from any plant based cellulose raw material may be used in the method.

The term "cellulose raw material" refers to any plant based cellulose raw material (plant material) source that contains cellulose and that can be used in production of cellulose pulp, refined pulp, and fibril cellulose.

Plant material may be wood and said wood can be from softwood tree such as spruce, pine, fir, larch, douglas-fir or hemlock, or from hardwood tree such as birch, aspen, poplar, alder, eucalyptus or acacia, or from a mixture of softwoods and hardwoods. Non-wood material can be from agricultural residues, grasses or other plant substances such as straw, leaves, bark, seeds, hulls, flowers, vegetables or fruits from cotton, corn, wheat, oat, rye, barley, rice, flax, hemp, manilla hemp, sisal hemp, jute, ramie, kenaf, bagasse, bamboo or reed.

The term "cellulose pulp" refers to cellulose fibers, which are isolated from any cellulose raw material using chemical, mechanical, thermo-mechanical, or chemi- thermo-mechanical pulping processes.

Cellulose pulp of plant origin, especially wood (softwood or hardwood pulp, for example bleached birch pulp) and where the cellulose molecules are produced in one of the above-described methods, is easy to disintegrate to fibril cellulose using any mechanical disintegration methods.

The term "nanofibrillated cellulose" or NFC refers to a collection of isolated cellulose microfibrils (nanofibers) or microfibril bundles derived from cellulose raw material. Microfibrils have typically high aspect ratio: the length exceeds one micrometer while the number-average diameter is typically below 200 nm (1-200 nm, suitably 1 - 100 nm). The diameter of microfibril bundles can also be larger but generally less than 1 µm. The smallest microfibrils are similar to so called elementary fibrils, which are typically 2-12 nm in diameter. The dimensions of the fibrils or fibril bundles are dependent on raw material and disintegration method.

NFC is characterized by very high water retention values, a high degree of chemical accessibility and the ability to form stable gels in water or other polar solvents. NFC product is typically a dense network of highly fibrillated celluloses. NFC may also contain some hemicelluloses; the amount is dependent on the plant source and pulping conditions.

Several different grades of NFC have been developed using various production techniques. The grades have different properties depending on the manufacturing method, degree of fibrillation and chemical composition. The chemical compositions of the grades also vary. Depending on the raw material source, e.g. HW vs. SW pulp, different polysaccharide composition exists in the final NFC product.

NFC may be sterilized prior to use, suitably in a gel form. In addition, if desired, prior to fibrillation/mechanical disintegration, the cellulose pulp may be aseptically collected from the pulp mill immediately after bleaching stage when the pulp is still sterile.

The obtained NFC has excellent gelling ability, which means that it forms a hydrogel already at a low consistency in an aqueous medium.

The pretreatment results typically in M⁺ form of native cellulose pulp. M is alkali metal, alkaline earth metal or metal, suitably Na, K, Li, Cu or Ag, particularly Na The obtained M⁺ form of native cellulose pulp provides benefits to the NFC manufactured there from, particularly with respect to the fibrillation process and quality of the obtained nanofibrillated cellulose product. Particularly, an improved quality of native NFC, simultaneously with respect to transparency and viscosity can be achieved, when compared to a similar NFC manufactured without the pretreatment step, even if the fibrillation energy was increased unlimitedly, for example increasing the number of passes in the mechanical disintegrator.

The pretreated NFC product is also suitable for biochemical, pharmaceutical and molecular science applications because the product contains no reagent residues like for example the chemically modified grades of NFC, it is biocompatible and compatible with various components. Said residues are regarded as potentially toxic or harmful in drug delivery applications, in applications dealing with highly sensitive analysis and determination of biochemical compounds. As NFC is not a polymerization product, there are no monomer residues left in the product. With regard to nucleic acid analysis and isolation, the risk of potential enumeration and detection problems can be avoided or at least significantly reduced. It has no adverse effects and does not interfere with DNA isolation or PCR analysis.

The pretreated NFC is a nontoxic product, which is easy to manufacture, easy to handle and requires no specific precautions from the end user.

When compared with the untreated product, the pretreated NFC product offers at least the following benefits:
- Fibrillated M⁺ form of native cellulose pulp contains higher amounts of nanomaterial
- The amount of finer material is higher and the NFC material is more homogeneous
- A product having turbidity of less than 200 NTU, even less than 150 NTU can be achieved with pretreated NFC
- Higher viscosities can be achieved with fibrillated Na⁺ form of cellulose pulp, the viscosity being more than 15 000mPas, suitably more than 30 000 mPas (1.5 %,10 rpm)
- Neutral, highly transparent and highly viscous product can be obtained without chemical pretreatment or without additives
- The gellability of the NFC product is improved
- According to fiber analysis (Fiberlab test) the pretreated NFC product contains less than 5000 particles/mg, suitably less than 1000 particles/mg (large particles), even less than 200 particles/mg.
- The purity of the NFC product is high (contains less impurities and contains no salts), and the quality is reproducible.
- The method provides a NFC product of higher quality with the same or even lower energy input

### EXAMPLES

The following examples are illustrative embodiments of the present invention as described above, and they are not meant to limit the invention in any way.

### Example 1: Pretreatment of cellulose pulp followed by fibrillation

1500 g of wet native cellulose pulp obtained from bleached birch pulp was filtered and the solid mass was diluted with 0.01M aqueous HCl to obtain suspension having dry matter content of approx. 1-1.2 % by weight. The suspension was allowed to stand for approx. 15 min with occasional agitation. The suspension was then filtered, washed twice with deionized water and filtered. Then the solid mass was suspended in a 0.005 M aqueous NaHCO₃ solution to obtain suspension having dry matter content of approx. 1-1.2 % by weight, the pH of the obtained suspension was adjusted between 8 and 9 with 1 M aqueous NaOH solution and the obtained suspension was allowed to stand for 15 min with occasional agitation. The suspension was filtered and the solid mass was washed with deionized water until the conductivity of the filtrate was less than 20µS/cm.

Samples of the obtained solid mass were fibrillated (mechanically disintegrated) from 1 to 5 passes using Masuko Supermass colloider, with MKGA10-80 grinding stones. Respectively also samples without the pretreatment were subjected to fibrillation in the Masuko Supermass colloider, with MKGA10-80 grinding stones.

Samples of the obtained solid mass were also preground, followed by fibrillation in Microfluidics Fluidizer, once trough APM+200µm chambers and from 1 to 10 times through APM+100 µm chambers. Samples from pretreated and after 2, 3 and 4 passes and without pretreatment were centrifuged and the amount of the nanomaterial (nanosized material) in the upper phase was determined.

Results presented in Figure 1 show that the pretreated material (Fluidizer Na) contains more nanomaterial after pregrinding and fluidization. According to testing it contained 59 % by weight of nanosized material and the untreated sample (Fluidizer ref.) contained 35 % by weight of nanosized material.

Figure 2 illustrates the difference between the fibrillation in the pretreated (2b) and untreated (2a) material after fibrillation (4 passes), as optical microscope photos.

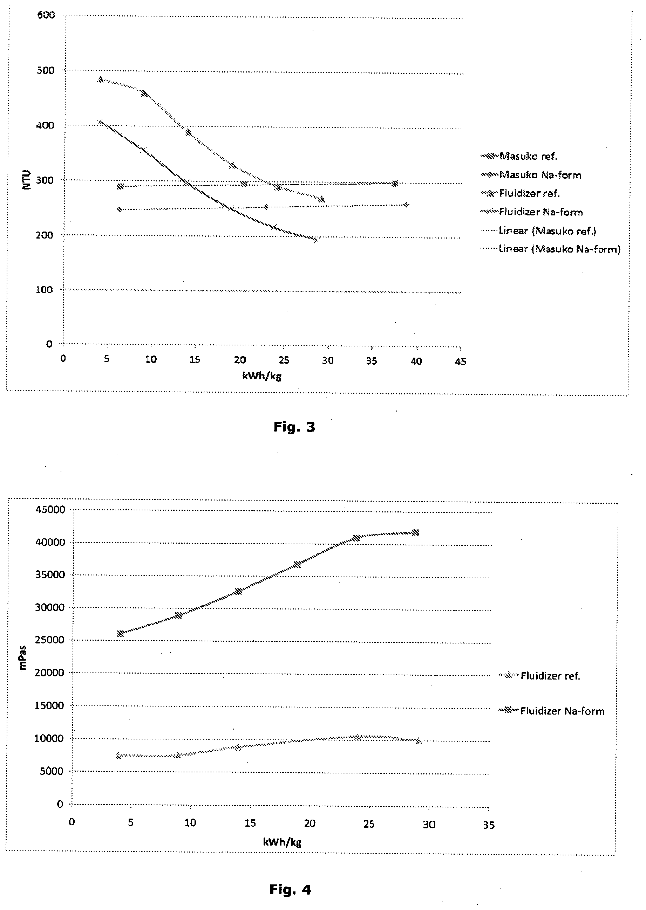

Figure 3 provides turbidity results as a function of energy consumption, of pretreated samples and untreated samples after fibrillation in a supermass colloider (Masuko) or a Fluidizer. Without the pretreatment no product with turbidity below 200 was obtained. Pretreatment clearly reduces the turbidity values. Turbidity was measured using an optical method, wherein so called turbidimetry and nephelometry are used. The measurement was carried out at 0.1% concentration using HACH P2100 -device. A NFC sample was diluted with water in such a way that 299.5 g water and 0.5 g NFC (calculated as NFC) are mixed carefully.

Results of Brookfield viscosity measurements of pretreated fibrillated products and untreated fibrillated products (fibrillation in Microfluidics Fluidizer) are presented in Figure 4. Higher viscosities are obtained with pretreated samples. Brookfield viscosimeter with a vane spindle number 73 was used, equipped with Brookfield RVDV-III spring, rotational speed 10 rpm and 1.5 % concentration. According to fiber analysis (Fiberlab Kajaani apparatus) pretreated fibrillated product (fibrillation in Microfluidics Fluidizer) 3 passes, comprised 9410 particles/g and 6 passes, comprised 86 particles/g. The corresponding untreated product, 3 passes, comprised 14029 particles/g and 6 passes 692 particles/g.

Respectively, Brookfield viscosities of pretreated fibrillated products and untreated fibrillated products (fibrillation with Masuko Supermass colloider) 2 passes, were 67329 mPas and 44763 mPas.

## Claims

1. A method for the manufacture of nanofibrillated cellulose, comprising the steps where native cellulose pulp is pretreated, said pretreating comprising the steps where an aqueous suspension of native cellulose pulp is brought into contact with an inorganic or organic acid and agitated to obtain pH of the suspension below 4, followed by removal of water and washing the solid matter with water, forming an aqueous suspension of the solid matter, then at least one water soluble salt of NH₄⁺, alkali metal or alkaline earth metal or metal is added to the formed suspension followed by agitation, adjusting the pH of the suspension to the range from 7.5 to 12 using an inorganic base, followed by removal of water to yield solid matter, washing the solid matter with distilled or deionized water to yield pretreated native cellulose pulp; and followed by forming an aqueous suspension of the pretreated native cellulose pulp, subjecting it to a pregrinding step and disintegrating it mechanically in a fluidizer type disintegrator.

2. The method according to claim 1, wherein the organic acid is selected from C1 - C8 carboxylic acids, and the inorganic acid is selected from hydrochloric acid, nitric acid, hydrobromic acid and sulphuric acid.

3. The method according to claim 1 or 2, wherein the organic acid is selected from acetic acid, formic acid, butyric acid, propionic acid, oxalic acid and lactic acid.

4. The method according to any one of claims 1-3, wherein the pH is adjusted using the acid to below 3.

5. The method according to any one of claims 1-4, wherein the water soluble salt of NH₄⁺, alkali metal, alkaline earth metal or metal is selected from inorganic salts, complexes and salts formed with organic acids, of NH₄⁺, alkali metals, alkaline earth metals or metals.

6. The method according to any one of claims 1-5, wherein the water soluble salt of NH₄⁺, alkali metal, alkaline earth metal or metal is a salt of NH₄⁺, Na, K, Li, Ag or Cu.

7. The method according to any one of claims 1-6, wherein the water soluble salt of alkali metal, alkaline earth metal or metal is NaHCO₃, KNO₃ or AgNO₃.

8. The method according to any one of claims 1-7, wherein the inorganic base is selected from NaOH, KOH, LiOH or NH₃.

9. The method according to any one of claims 1-8, wherein the pH of the suspension is adjusted with the inorganic base to the range from 8 to 9.

10. The method according to any one of claims 1-9, wherein the mechanical disintegration is carried out from 1 to 10 passes.

11. A nanofibrillated cellulose product obtainable by the method of any one of claims 1-10, said product comprising nanofibrillated cellulose and having a turbidity of less than 200 NTU at 0.1% concentration and a Brookfield viscosity of more than 15,000 mPa·s.

12. The nanofibrillated cellulose product according to claim 11 wherein the product has a turbidity of less than 150 NTU at 0.1% concentration and a Brookfield viscosity of more than 30,000 mPa·s at 1.5% concentration.

## Patentansprüche

1. Verfahren zur Herstellung von nanofibrillierter Cellulose, umfassend die Schritte, in denen nativer Cellulosefaserstoff vorbehandelt wird, wobei die Vorbehandlung die Schritte umfasst, in denen eine wässrige Suspension von nativem Cellulosefaserstoff in Kontakt mit einer anorganischen oder organischen Säure gebracht und gerührt wird, um einen pH-Wert der Suspension von unter 4 zu erzielen, gefolgt vom Entfernen von Wasser und Waschen des Feststoffes mit Wasser, Ausbilden einer wässrigen Suspension des Feststoffes, wonach der ausgebildeten Suspension wenigstens ein wasserlösliches Salz von NH₄⁺, Alkalimetall oder Erdalkalimetall oder Metall zugegeben und anschließend gerührt wird, Einstellen des pH-Wertes der Suspension im Bereich von 7,5 bis 12 mit Hilfe einer anorganischen Base, gefolgt vom Entfernen von Wasser zur Gewinnung eines Feststoffs, Waschen des Feststoffs mit destilliertem oder deionisiertem Wasser zur Gewinnung von vorbehandeltem nativen Cellulosefaserstoff; gefolgt vom Ausbilden einer wässrigen Suspension des vorbehandelten nativen Cellulosefaserstoffs, dem Behandeln derselben in einem Vormahlschritt und dem mechanischen Zerfasern des Cellulosefaserstoffs in einem Zerfaserer vom Typ 'Fluidizer'.

2. Verfahren nach Anspruch 1, wobei die organische Säure aus C1- bis C8-Carbonsäuren gewählt wird und die anorganische Säure aus Salzsäure, Salpetersäure, Bromwasserstoffsäure und Schwefelsäure gewählt wird.

3. Verfahren nach Anspruch 1 oder 2, wobei die organische Säure aus Essigsäure, Ameisensäure, Buttersäure, Propionsäure, Oxalsäure und Milchsäure gewählt wird.

4. Verfahren nach einem der Ansprüche 1 bis 3, wobei der pH-Wert mit Hilfe der Säure auf unter 3 eingestellt wird.

5. Verfahren nach einem der Ansprüche 1 bis 4, wobei das wasserlösliche Salz von NH₄⁺, Alkalimetall, Erdalkalimetall oder Metall aus anorganischen Salzen, Komplexverbindungen und mit organischen Säuren ausgebildeten Salzen von NH₄⁺, Alkalimetallen, Erdalkalimetallen oder Metallen gewählt wird.

6. Verfahren nach einem der Ansprüche 1 bis 5, wobei das wasserlösliche Salz von NH₄⁺, Alkalimetall, Erdalkalimetall oder Metall ein Salz von NH₄⁺, Na, K, Li, Ag oder Cu ist.

7. Verfahren nach einem der Ansprüche 1 bis 6, wobei das wasserlösliche Salz von Alkalimetall, Erdalkalimetall oder Metall NaHCO₃, KNO₃ oder AgNO₃ ist.

8. Verfahren nach einem der Ansprüche 1 bis 7, wobei die anorganische Base aus NaOH, KOH, LiOH oder NH₃ gewählt wird.

9. Verfahren nach einem der Ansprüche 1 bis 8, wobei der pH-Wert der Suspension mit der anorganischen Säure auf den Bereich von 8 bis 9 eingestellt wird.

10. Verfahren nach einem der Ansprüche 1 bis 9, wobei die mechanische Zerfaserung in 1 bis 10 Arbeitsgängen ausgeführt wird.

11. Nanofibrilliertes Celluloseprodukt, das durch das Verfahren nach einem der Ansprüche 1 bis 10 gewonnen werden kann, wobei das Produkt native Cellulose umfasst und eine Trübung von weniger als 200 NTU bei 0,1 % Konzentration und eine Viskosität nach Brookfield von mehr als 15.000 mPas bei 1,5 % Konzentration aufweist.

12. Nanofibrilliertes Celluloseprodukt nach Anspruch 11, wobei das Produkt eine Trübung von weniger als 150 NTU bei 0,1 % Konzentration und eine Viskosität nach Brookfield von mehr als 30.000 mPas bei 1,5 % Konzentration aufweist.

## Revendications

1. Procédé de fabrication de cellulose nanofibrillée comprenant les étapes dans lesquelles la pâte cellulosique native est prétraitée, ledit prétraitement comprenant les étapes dans lesquelles une suspension aqueuse de pâte cellulosique native est mise en contact avec un acide inorganique ou organique et agitée pour obtenir un pH de la suspension inférieure à 4, suivi par l'élimination d'eau et le lavage à l'eau de la matière solide, la formation d'une suspension aqueuse de la matière solide, puis au moins un sel, soluble dans l'eau, de NH₄⁺, de métal alcalin ou de métal alcalinoterreux ou de métal est ajouté à la suspension formée, suivi par l'agitation, l'ajustement du pH de la suspension dans la plage de 7,5 à 12 à l'aide d'une base inorganique, suivi par l'élimination d'eau pour obtenir une matière solide, le lavage de la matière solide à l'aide d'une eau distillée ou déionisée pour obtenir une pâte cellulosique native prétraitée ; et suivi par la formation d'une suspension aqueuse de ladite pâte cellulosique native prétraitée, la soumission de cette dernière à une étape de prébroyage et la désintégration mécanique de cette dernière dans un désintégrateur de type « fluidizer ».

2. Procédé selon la revendication 1, dans lequel l'acide organique est choisi parmi les acides carboxyliques C1 à C8 et l'acide inorganique est choisi parmi les acides chlorhydrique, azotique, bromhydrique et sulfurique.

3. Procédé selon la revendication 1 ou 2, dans lequel l'acide organique est choisi parmi les acides acétique, formique, butyrique, propionique, oxalique et lactique.

4. Procédé selon l'une des revendications 1 à 3, dans lequel le pH est ajusté à une valeur inférieure à 3 à l'aide de l'acide.

5. Procédé selon l'une des revendications 1 à 4, dans lequel le sel, soluble dans l'eau, de NH₄⁺, de métal alcalin, de métal alcalinoterreux ou de métal est choisi parmi les sels inorganiques, les composés complexes et les sels formés avec des acides organiques, de NH₄⁺, de métaux alcalins, de métaux alcalinoterreux ou de métaux.

6. Procédé selon l'une des revendications 1 à 5, dans lequel le sel soluble dans l'eau de NH₄⁺, de métal alcalin, de métal alcalinoterreux ou de métal est un sel de NH₄⁺, Na, K, Li, Ag ou Cu.

7. Procédé selon l'une des revendications 1 à 6, dans lequel le sel soluble dans l'eau de métal alcalin, de métal alcalinoterreux ou de métal est NaHCO₃, KNO₃ ou AgNO₃.

8. Procédé selon l'une des revendications 1 à 7, dans lequel la base inorganique est choisie parmi NaOH, KOH, LiOH ou NH₃.

9. Procédé selon l'une des revendications 1 à 8, dans lequel le pH de la suspension est ajusté dans une plage de 8 à 9 à l'aide de la base inorganique.

10. Procédé selon l'une des revendications 1 à 9, dans lequel la désintégration mécanique est réalisée par 1 à 10 passes.

11. Produit de cellulose nanofibrillée pouvant être obtenu par le procédé selon l'une des revendications 1 à 10, ledit produit comprenant de la cellulose nanofibrillée et ayant une turbidité inférieure à 200 NTU à 0,1 % de concentration et une viscosité Brookfield supérieure à 15 000 mPa·s.

12. Produit de cellulose nanofibrillée selon la revendication 11 dans lequel le produit présente une turbidité inférieure à 150 NTU à 0,1 % de concentration et une viscosité Brookfield supérieure à 30 000 mPa·s à une concentration de 1,5 %.
